# EUROPEAN PATENT APPLICATION

(11) **EP 1 064 849 A1**
(43) Date of publication of application: **03.01.2001**
(21) Application number: 99202069.3
(22) Date of filing: 28.06.1999
(51) Int. Cl.: A23B 7/10, A23B 7/06, A23B 7/148, A23B 7/005, A23B 9/02, A23B 9/24, A23B 9/20

(54) **Pulse or vegetable product**

(71) Applicant: SOCIETE DES PRODUITS NESTLE S.A., 1800 Vevey (CH)
(72) Inventor: Meyer, Philipp Paul, 60000 Kuala Lumpur (MY); Jaelminger, Göran, 25661 Helsingborg (SE)
(74) Representative: Wavre, Claude-Alain

(57) **Abstract**

Full moisture shelf stable pulse or vegetable product having a pH of 3.7 to 4.5, and comprising a cooked or precooked pulse or vegetable, an acid and an oil.

## Description

The present invention relates to a pulse or vegetable product consisting of a cooked or precooked pulse or vegetable having a long shelf life.

US5545425 (WU R.Y.A.) discloses a process for preparing a shelf-stable, packaged, legume containing product comprising hydrating legume seeds, pouring them into a retortable vessel, sealing the retortable vessel and heating at 110-130°C for 20-150 min.

WO96/15684 (SOCIETE DES PRODUITS NESTLE) discloses fast rehydrating pulses obtained by a process in which the pulses are cooked with steam under pressure, cooled by placing them under vacuum and dried.

A first object of the present invention is to provide a full moisture shelf stable pulse or vegetable product of outstanding organoleptical quality which is not intended to be actually cooked at the consumer's end but, on the contrary, is intended to be consumed after simply heating up or very shortly cooking.

A second object of the present invention is to provide a process for manufacturing a full moisture shelf stable pulse or vegetable product of outstanding quality which is intended to be consumed after simply heating up or very shortly cooking.

The full moisture shelf stable pulse or vegetable product according to the present invention has a pH of from 3.7 to 4.5, preferably from 3.8 to 4.3, and comprises a cooked or precooked pulse or vegetable, an acid and an oil.

Preferably, a full moisture shelf stable pulse product according to the present invention has a pH of from 3.7 to 4.5, preferably from 3.8 to 4.3, and comprises a cooked or precooked pulse having a water content of from 40 to 80% by weight, an acid and an oil.

The process for manufacturing a full moisture shelf stable pulse or vegetable product according to the present invention comprises the steps of cooking or blanching a pulse or vegetable, water cooling, dipping into an acidified water, oiling, packaging and in pack pasteurising it.

Preferably, a process for manufacturing a full moisture shelf stable pulse product according to the present invention comprises the steps of water soaking a dry pulse, cooking or blanching, water cooling, dipping into an acidified water, oiling, packaging and in pack pasteurising it.

More preferably, a process for manufacturing a full moisture shelf stable pulse product according to the present invention comprises the steps of water soaking a dry pulse, cooking it with steam under pressure, cooling it by placing it under vacuum, water cooling, dipping into an acidified water, oiling, packaging and in pack pasteurising it.

In the present invention, the vegetable can be any known vegetable such as a carrot, potato, cauliflower or lettuce, or the pulse may be any commercial fresh or dry pulse, in particular dry soya, bean, pea or lentil seeds, for example.

The acid may be any food grade acid, especially lactic acid, phosphoric acid, citric acid or Glucono-delta-lactone, for example.

The oil may be a vegetable oil, in an amount of from 0.5 to 5% by weight of the cooked or precooked pulse or vegetable, for example. The oil may especially be peanut oil, rapeseed oil, sunflower oil, palm oil, corn oil, palm olein or mixtures thereof, for example. About 0.5 to 2% of emulsifiers, in % by weight of the oil, especially a monoglyceride or mixtures of monoglycerides, may advantageously be added to the oil, for example.

To implement the present process, a vegetable may be cut into pieces before being cooked, for example.

If it is in a dry state, a pulse may be soaked so that it has a water content similar to the water content of the pulse in fresh state, namely a water content of from about 40 to 80%, for example.

A dry pulse may be soaked for from 3 to 30 h at from 15 to 30°C in pure water, in acidified water and/or in water having added therein up to 0.5% NaHSO₃ and/or up to 1% of C₆H₅Na₃O₇ as agent for stabilizing the colour, for example.

The vegetable or pulse may be cooked in water and/or with steam, for example.

A pulse may especially be cooked at from 105 to 140°C for from 3 to 40 min in a vessel in which a pressure equal to the saturation vapour pressure at the chosen temperature can be established, for example. The steam atmosphere may be created in the vessel either by vaporization of an appropriate amount of water, or by direct injection of steam, the air initially present in the vessel being driven out of the latter at the beginning of the process, for example.

The pulse cooked in this way may be cooled to a temperature of between about ambient temperature to 80°C while placing it under vacuum by drawing off steam and/or condensed vapour to a residual pressure below 300 mbar and maintaining this vacuum for from 2 to 10 min, the pulse being not allowed to come into contact with cold air before the end of this cooling step, for example.

Water cooling may be carried out in a bath of water at ambient temperature, namely at a temperature of from about 18 to 35°C, for about 30 s to 2 min, for example.

During the water cooling step, the cooking step may be stopped completely.

After water cooling the pulse or vegetable is dipped into an acidified water in order to be acidified to a final pH of from 3.7 to 4.5. To this end, the pulse or vegetable may be dipped into a water containing from 0.5 to 2.5% acid, especially lactic acid, phosphoric acid, citric acid or Glucono-delta-lactone, at ambient temperature, especially at a temperature of from 18 to 35°C, for from 50 to 250 s, for example.

After this acidifying step, excess acidified water may be drained off for about 30 s to 2 min, for example.

The oiling step may be carried out so that the surface of the pulse or vegetable is coated with oil in an amount of from 0.5 to 5% by weight of the pulse or vegetable, for example. In order that the oil is well distributed in very fine particle over the pulse or vegetable surface, about 0.5 to 2% of emulsifiers, in % by weight of the oil, may be added to the oil, for example.

The oiling step may be carried out either before or during the packaging step. Preferably, the pulse or vegetable is packaged in a flexible pouch with controlled volume of head space. To this end, the pulse or vegetable may be dosed into a vertical pouch after its bottom has been sealed and oil may be injected into the pouch before its top is sealed, for example.

Eventually the packaged pulse or vegetable product is in pack pasteurised.

This in pack pasteurising step may be carried out in a steam medium, while having the temperature in the centre of the pouch reaching a temperature of from 80 to 100°C and holding it for from 1 to 80 min, for example.

The pouches may then be cooled either for 5 to 15 min in cold water containing a disinfectant, or for 30 to 60 min by chilled air, at 5 to 15°C, for example.

The present process may be implemented by means of normal equipment such as water bath, water cooker, autoclave or steam cabinet, trays, steeping units and pasteurising unit from the pulse or vegetable industry, for example.

The present process surprisingly provides a pulse or vegetable product having outstanding organoleptical properties, especially an outstanding texture, in view of the fact that it is not intended to be actually cooked again at the consumer's end but only heated up or very shortly cooked.

Heating up or very shortly cooking the present pulse or vegetable product may be carried out in a pan, in a microwave oven, or by pouring hot or boiling water onto it, for example.

The pulse or vegetable product and the process according to the present invention are illustrated in the following Example in which the percentages and parts are by weight unless otherwise stated.

### Example

A precooked lentils product having a long shelf life was made from commercially available red lentils having a water content of 11-13%.

The lentils were soaked at 20°C for 4 h at a rate of one part of lentils for three parts of water which was acidified with 0.8% lactic acid to a pH of 3.0. During soaking the initial pH of the lentils of 6.7 was decreased to 5.7. The water content was increased from 11-13 to 52-55%.

The lentils were distributed on trays to a layer height of about 1 cm, for steam pressure cooking.

The lentils were brought in a discontinuously working steam cabinet. In this autoclave the steam injection increased the temperature to 120°C. Steam pressure cooking lasted 15 min.

Flash cooling the lentils down to 65°C was carried out by applying vacuum to the steam cabinet

Then water cooling the lentils down to 25°C stopped cooking them.

The lentils were then dipped (at a rate of one part of lentils to twenty parts of water) into a water containing 2.2% lactic acid (pH 1.7) and having a temperature of 30°C, for 150 s. The pH of the lentils was then 4.3 and their water content was between 60 and 65%.

Lentils portions weighing about 70 g were dosed into vertical pouches after their bottoms had been sealed, and 1% palmolein was injected into each pouch before their tops were sealed. The pouches were slightly squeezed to achieve a homogeneous thickness in order to gurantee a homogeneous pasteurisation of the lentils throughout the whole portion.

The lentils were in pack pasteurised in steam at 97°C, the temperature in the centre of the pouch reaching a temperature of 85°C after 16 min and this temperature being held for 10 min.

The pouches were then cooled for 10 min in water having a temperature of 10°C and containing a disinfectant. The pouches were subsequently stored at 25°C.

The full moisture shelf stable lentils product thus obtained could be prepared for consumption by unpacking and heating up.

The lentils did not stick together. They had outstanding organoleptical properties, especially a texture similar to the texture of freshly cooked red lentils.

## Claims

1. Full moisture shelf stable pulse or vegetable product, which has a pH of 3.7 to 4.5, preferably from 3.8 to 4.3, and which comprises a cooked or precooked pulse or vegetable, an acid and an oil.

2. Full moisture shelf stable pulse product, which has a pH of 3.7 to 4.5, preferably from 3.8 to 4.3, and which comprises a cooked or precooked pulse having a water content of from 40 to 80% by weight, an acid and an oil.

3. A pulse or vegetable product according to claim 1, in which the acid is a food grade acid, especially lactic acid, phosphoric acid, citric acid or Glucono-delta-lactone.

4. A pulse or vegetable product according to claim 1, which comprises 0.5 to 5% oil, in % by weight of the cooked or precooked vegetable or pulse.

5. A pulse or vegetable product according to claim 1, in which the oil is vegetable oil, especially peanut oil, rapeseed oil, sunflower oil, palm oil, corn oil, palm olein or mixtures thereof.

6. A process for manufacturing a full moisture shelf stable pulse or vegetable product, which comprises the steps of cooking or blanching a pulse or vegetable, water cooling, dipping into an acidified water, oiling, packaging and in pack pasteurising it.

7. A process for manufacturing a full moisture shelf stable pulse product, which comprises the steps of water soaking a dry pulse, cooking or blanching, water cooling, dipping into an acidified water, oiling, packaging and in pack pasteurising it.

8. A process for manufacturing a full moisture shelf stable pulse product, which comprises the steps of water soaking a dry pulse, cooking it with steam under pressure, cooling it by placing it under vacuum, water cooling, dipping into an acidified water, oiling, packaging and in pack pasteurising it.

9. A process according to claim 7, in which the pulse is soaked at a rate of about one part of pulse or vegetable for one to four parts of water at 30 to 60°C for 30 min to 5 h.

10. A process according to claim 6, in which the pulse or vegetable is dipped into an acidified water containing from 0.5 to 2.5% acid, especially lactic acid, phosphoric acid, citric acid or Glucono-delta-lactone, at ambient temperature, especially at a temperature of from 18 to 35°C, for from 50 to 250 s.
